# EUROPÄISCHE PATENTSCHRIFT

(11) **EP 0 487 883 B1**
(45) Veröffentlichungstag und Bekanntmachung des Hinweises auf die Patenterteilung: **08.02.1995**
(21) Anmeldenummer: 91117557.8
(22) Anmeldetag: 15.10.1991
(51) Int. Cl.: B01D 25/26, B30B 9/26

(54) **Vorrichtung zum Entwässern von Schlamm**
Apparatus for the dewatering of sludge
Dispositif pour la déshydratation de boues

(30) Priorität: 30.11.1990 CH 3797/90
(43) Veröffentlichungstag der Anmeldung: 03.06.1992
(73) Patentinhaber: HOPPE + PARTNER, CH-6301 Zug (CH)
(72) Erfinder: Hoppe, Willy, CH-6330 Cham (CH)
(74) Vertreter: Patentanwälte Schaad, Balass, Menzl & Partner AG

(56) Entgegenhaltungen:
- EP-A- 0 100 270
- EP-A- 0 337 218
- EP-A- 0 425 757
- CH-A- 82 940
- GB-A- 2 064 973

## Beschreibung

Die Erfindung betrifft eine Vorrichtung zum Entwässern von Schlamm nach dem Oberbegriff von Anspruch 1.

Aus der EP-A 0 337 218 ist schon eine Vorrichtung dieser Art im Zusammenhang mit einem entsprechenden Entwässerungsverfahren bekannt geworden. Hierbei begrenzt der Turm einen Ringraum und ein von oben nach unten wendelförmig durch diesen geführtes Band trägt eine Schlammschicht. Die aus den Umgängen gebildete Säule stützt sich auf einem sich drehenden Boden ab und entwässert sich zumindest unter dem Eigengewicht derselben. Vom Boden wird die entwässerte Schlammschicht durch eine Oeffnung im Turmmantel zusammen mit dem Band abgeführt.

Bei der Anwendung dieses Verfahrens der Schlammentwässerung bereitet insbesondere das Abführen des entwässerten Schlammes unmittelbar aus dem Ringraum und im Bereich des grössten Verdrängungsdruckes einige Schwierigkeiten. Darüberhinaus sind für die grosstechnologische Anwendung desselben offensichtlich grosse Abmessungen des Turmes in dessen Durchmesser und Höhe erforderlich oder zumindest sinnvoll. Infolge seiner zylindrischen Form stellt seine Herstellung dabei Anforderungen an die Grösse und Leistungsfähigkeit der Fertigungseinrichtungen. Solche Anforderungen sind nicht überall erfüllbar.

In der älteren, nachveröffentlichten europäischen Patentanmeldung EP-A-0 425 757 (Priorität: 03.11.89; Anmeldetag 23.05.90; Veröffentlichungstag 08.05.91) ist im Zusammenhang mit deren Ausführungsform nach den Fig. 8 - 10 eine Weiterentwicklung beschrieben, bei welcher der mitdrehende Boden des um eine vertikale Achse drehbaren Teiles des Entwässerungsturmes eine nach unten gerichtete Durchtrittsöffnung besitzt, um das Transmissivitätspaket und damit entwässerten Schlamm in einen drucklosen Raum zu entlassen. Der stationäre unterste Teil des Turmes enthält eine mit dem drucklosen Raum verbundene seitliche Austrittsöffnung. Die Durchtrittsöffnung im Boden lässt sich durch Versetzung in Umfangsrichtung nach Massgabe der Turmdrehung stationär halten. Der Entwässerungsraum weist darüberhinaus eine seitliche Auskleidung aus zweilagigem Transmissivitätspaket auf, in welcher das seitlich austretende Schlammwasser aufgenommen und ausserhalb der Schlammlagen abgeführt wird.

Aufgabe der Erfindung ist die Schaffung einer Vorrichtung, bei welcher sich der Verdrängungsdruck dem Abführen des Schlammes aus dem Turm nicht entgegenstellt und bei welcher die Herstellbarkeit auch bei grösseren Abmessungen gegeben ist.

Die Lösung dieser Aufgabe gelingt mit den Merkmalen des Anspruchs 1.

Das Abführen der Schlammschicht zusammen mit dem Band nach abwärts durch die im Boden vorgesehene Durchtrittsöffnung wird durch die Schlammsäule nicht behindert. Die ebenen Seitenflächen des Turmes lassen sich ohne aufwendige Fertigungseinrichtungen auch in grossen Abmessungen herstellen und gegebenenfalls mit den notwendigen Versteifungen zusammenbauen.

Gemäss einer bevorzugten Ausführungsform ist der Turm in bezug auf die ortsfest angeordneten Mittel zur Zuführung des Bandes und des Schlammes auf einer geradlinigen Bahn verfährbar und die Durchtrittsöffnung im Boden ist entsprechend der Turmbewegung versetzbar. Die Führung und Bewegung des Turmes lässt sich in einfacher Weise realisieren und gestattet, die Beschickung mit Band und Abschnitten und Schlamm mit wenig Aufwand durchzuführen. Das Abführen des entwässerten Schlammes und des Bandes lässt sich mit geringem Aufwand erreichen.

Nachfolgend ist eine beispielsweise Ausführungsform der erfindungsgemässen Vorrichtung zum Entwässern von Klärschlamm im Zusammenhang mit der Zeichnung erläutert.

Es zeigen:
- Fig. 1: die Vorrichtung im Vertikalschnitt entlang Linie I-I in Fig. 2,
- Fig. 2: die Vorrichtung nach Fig. 1 im Grundriss und
- Fig. 3: einen Vertikalschnitt entlang Linie III-III in Fig.2.

Ein der Schlammentwässerung dienender Turm 2 mit ebenen Paaren von Seitenwänden 4 und 6 ist vertikal angeordnet und auf einer durch Schienen 8 angedeuteten definierten horizontalen geradlinigen Bahn beweglich. Der Turm 2 weist hierzu einen durch vier Fahrrollen 10 angedeuteten Fahr- oder Gleitmechanismus auf. Die an einem dessen unseres Ende umgebenden Flansch 12 befestigten Fahrrollen 10 stützen sich an den Schienen 8 unter seitlicher Führung. Der zwischen den Schienen und den Rollen 10 bestehende Führungseingriff ist aus Gründen der Vereinfachung der Darstellung nicht gezeigt. Die Schienen 12 sind an einer Trägerstruktur 14 abgestützt. Der Weg des Turmes 2 zwischen zwei Endlagen ist durch symbolisch dargestellte Endanschläge 16 begrenzt, die einen nicht dargestellten Fahrantrieb, der z.B auf ein Paar von gleiachsig angeordneten Fahrrollen 10 einwirkt, in bekannter Weise umsteuert.

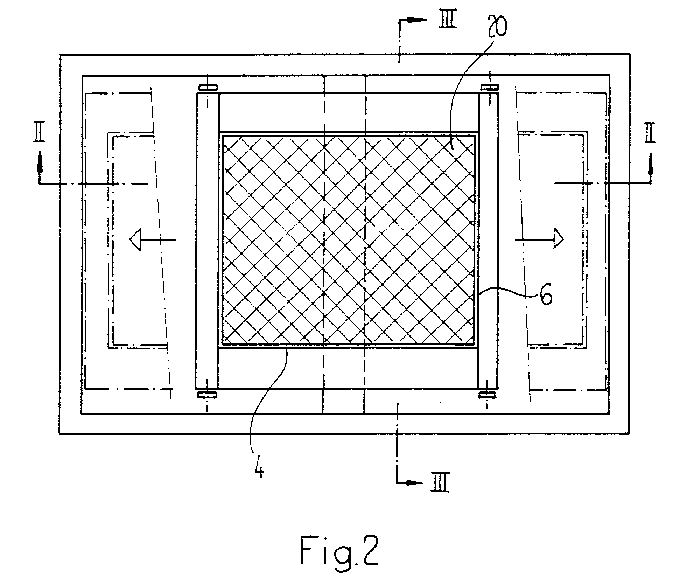

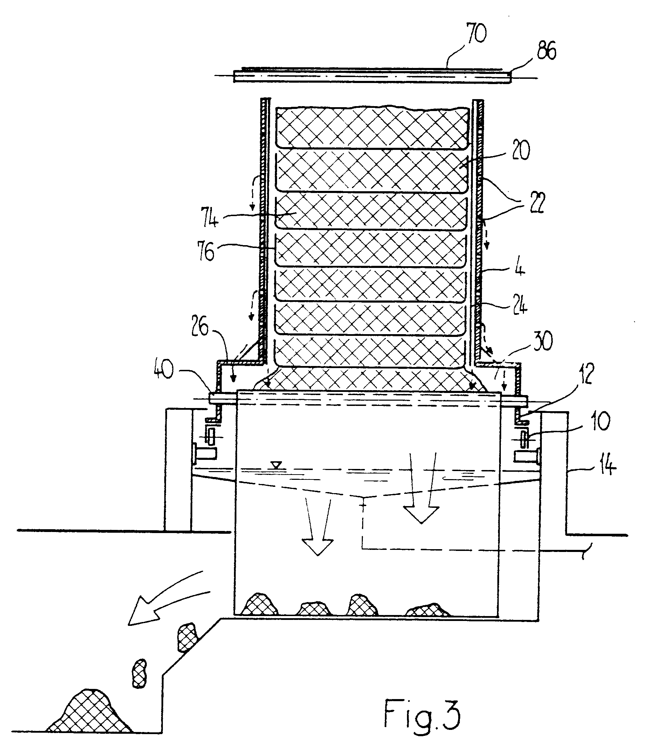

Die Seitenwände 4 und 6 des Turmes 2, die mit über deren Fläche verteilten Perforationen oder Oeffnungen 22 versehen sind, begrenzen, wie aus Fig. 2 ersichtlich, einen Entwässerungsraum 20 mit rechteckigem Innenquerschnitt. Dabei bilden die Wände 4 dessen Längsseiten und entsprechend die Wände 6 die Breitseiten. Der Entwässerungsraum 20 ist mit an den Seitenwänden 4 und 6 angebrachten, aus zweilagigen Transmissivitätspaketen gebildeten Auskleidungen 24 versehen. An den Entwässerungsraum 20 schliesst nach dem unteren Ende hin ein Auslegeraum 30 an, der gegenüber dem ersteren durch je eine Absetzung 26 der Wände 4 erweitert ist (Fig. 3). Der Turm 2 weist eine durch sein oberes offenes Ende gebildete Eintrittsöffnung 32 sowie eine durch das untere offene Ende gebildete Austrittsöffnung 34 auf.

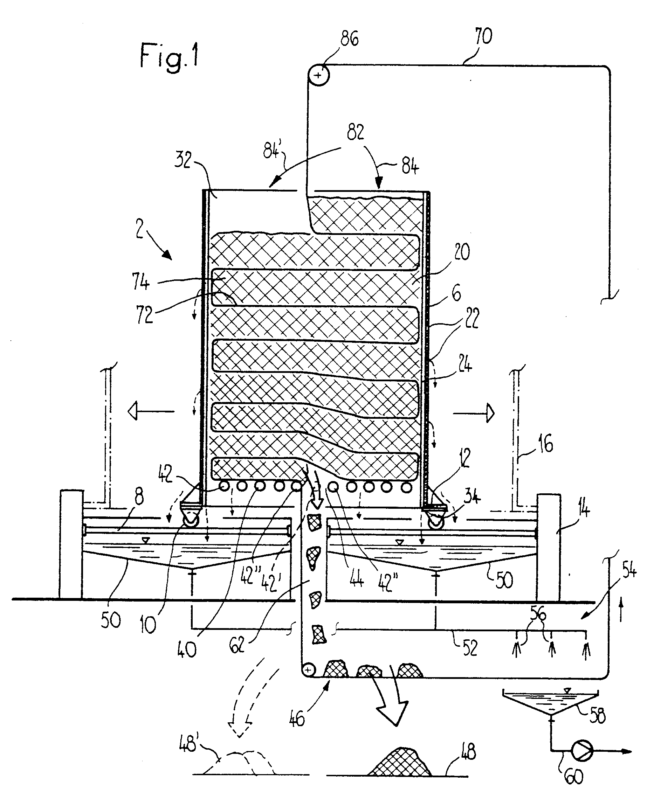

Aus den Fig. 1 und 3 ist ersichtlich, dass der Turm 2 im Bereich des Auslegeraumes 30 einen horizontalen Rostboden 40 aufweist, der durch in den Absetzungen 26 abgestützte Roststäbe 42 gebildet ist. Die mithin quer zur Bahn des Turmes 2 verlaufenden Roststäbe 42 sind in den Absetzungen 26 achsial verschiebbar und nach einer Seite so ausziehbar, dass der Auslegeraum 30 praktisch auf seiner ganzen Breite freigegeben wird. Für das Verschieben der Roststäbe sind zweckmässig nicht dargestellte, z. B. hyraulische Mittel vorgesehen. So kann jedem der Roststäbe ein Hubaggregat zugeordnet sein, oder aber zwei solche Aggregate können bei einer kontinuierlichen Bewegung des Turmes über eine begrenzte Strecke parallel zu dessen Bahn beweglich sein und für die der Auszieh-bzw. Einschiebeoperation mitwandern.

Unterhalb der Schienen 8 sind zwei Auffangwannen 50 angeordnet, die an eine Sammelleitung 52 angeschlossen sind. Mit der Sammelleitung 52 stehen einer Reinigungszone 54 zugeordnete Waschdüsen 56 in Verbindung. Ein der Reinigungszone 54 zugehöriges, unterhalb der Waschdüsen 56 angeordnetes Sammelbecken 58 ist über ein eine Förderpumpe enthaltendes Leitungssystem 60 mit einem nicht dargestellten Absetzbecken verbunden. Zwischen den beiden Auffangwannen 50 ist ein vertikaler Schacht 62 gebildet, der etwa mittig unterhalb des Turmweges angeordnet ist.

Oberhalb des Turmes 2 ist eine Schlammaufgabestelle 82 mit durch Pfeile 84 und 84' angedeuteten Aufgaberichtungen vorgesehen. Ebenso ist eine durch eine Transportrolle 86 angedeutete Zuführstelle für ein endloses Band 70 oberhalb des Turmes angeordnet. Das Band 70 wird danach zwischen den beiden Einführrichtungen 84 bzw. 84' etwa vertikal in den Turm 2 eingeführt. Das aus miteinander verbundenen Abschnitten von Transmissivitätspaketen gebildete Band 70 wird, wie in Fig. 1 dargestellt, im Turm 2 schleifenförmig verlegt. Auf jedem etwa horizontalen Schleifenstück 72, das sich von der einen zur anderen der beiden Wände 6 erstreckt, liegt eine Schlammlage 74. Ueber die Breite des Entwässerungsraumes 20 beidseitig überstehende Breitenbereiche des Bandes 70 werden zwischen der Transportrolle 86 und der Eintrittsöffnung 32 zu aufstehenden Rändern 76 umgebogen und vermitteln dem Band einen trogförmigen Querschnitt. Lediglich im Auslegeraum 30 legen sich die Ränder 76 des Bandes 70 flach und kommen in dieser Lage auf den Rostboden 40 zu liegen.

Bei den Abschnitten des Bandes handelt es sich vorteilhaft um dreilagige Transmissivitätspakete der in EP-A-0 337 218 beschriebenen Art. Die einzelnen Lagen sind je aus Kunststoff-Faservliesen gebildet. Dabei sind beidseitig einer eigentlichen Entwässerungslage Filterlagen angeordnet, welche ein Eindringen von Feststoffpartikeln in die Entwässerungslage verhindern. Die länglichen rechteckigen Abschnitte sind vorteilhaft lösbar miteinander verbunden, um beispielweise das Auswechseln von beschädigten Abschnitten zu erleichtern.

Das Gewicht der auf dem Rostbogen 40 abgestützten, eine Schlammsäule bildenden Schlammlagen 74 verdrängt aus diesen Schlammwasser. Dieses wird vom Band 70 aufgenommen und in die Auskleidung 24 abtransportiert. Aus den Auskleidungen 24 kann das Schlammwasser entweder vertikal abfliessen, oder aber durch die Oeffnungen 22 aus dem Entwässerungsraum 20 austreten. Das Schlammwasser fliesst in die Auffangwannen 50 ab. Durch die Durchtrittsöffnung 44 wird während der Hin-und Herbewegung des Turmes 2 Band abgeführt. Dabei wird auch Schlamm ausgefördert, so dass sich die Schlammsäule ständig nach abwärts bewegt. Da sowohl Schlamm wie auch Band nach abwärts aus dem Auslegeraum 30 abgeführt werden, behindert der dort noch herrschende Verdrängungsdruck dieses Abführen nicht. Dank der Trogform des Bandes in den horizontalen Schleifenstücken 72 wird ein Anhaften von Schlamm an den Auskleidungen 24 unter dem Verdrängungsdruck und deren Verstopfung weitgehend vermieden.

Der Abstand zwischen benachbarten Roststäben ist so gewählt, dass das unterste Bandstück der Schlammsäule entsprechenden Druck ohne wesentliche Ausbauchung nach unten auf diese übertragen kann. Dieser Abstand ist jedoch grösser als die Dicke des Bandes.

In Fig. 1 ist der Roststab 42' zurückgezogen dargestellt und die diesem unmittelbar benachbarten Roststäbe 42'' begrenzen eine Durchtrittsöffnung 44. Durch diese Durchtrittsöffnung 44 erstreckt sich das Band 70 nach abwärts aus dem Turm 2 heraus, wobei infolge der Bandumlenkung sich der getrocknete Schlamm vom Band löst. Dieses verläuft nach dem Austritt aus dem Turm 2 durch den Schacht 62 zwischen den beiden Auffangwannen 50 hindurch zu einer vor der Reinigungszone 54 liegenden Entladezone 46. Die Entladezone 46 ist z. B. mit einem nicht dargestelltem Rüttler ausgerüstet, um den noch auf dem Band liegenden oder noch anhaftenden Schlamm seitlich an eine Sammelstelle 48 abzuwerfen. Für das Band 70 sind ausserhalb des Turmes 2 weitere, nicht dargestellte Führungsorgane vorgesehen und dessen Umlaufbewegung wird durch die mit einem Antrieb verbundene Transportrolle 86 sichergestellt.

In der Darstellung nach Fig. 1 ist angenommen, dass sich der Turm 2, der sich etwa in der Mitte zwischen seinen Endlagen befindet, nach rechts bewegt. Dabei wird das oberste Bandstück 72 auf seine volle mögliche Länge ergänzt und fortlaufend mit von Aufgabestelle 82 in der Aufgaberichtung 84 kommendem Schlamm bedeckt. Hat der Turm 2 seine rechte Endlage erreicht, so erfolgt die Umsteuerung seines Antriebes, die einschliesslich einer allfällig notwendigen Abbremsung in selbsttätiger Weise vorgesehen sein kann. Der Turm bewegt sich anschliessend in Richtung seiner linksseitigen Endlage. Dabei erfolgt die Schlammaufgabe in der Richtung 84' auf das sich neu bildende, horizontale Schleifenstück.

Um das Ausfördern von entwässertem Schlamm sowie des Bandes 70 zu erleichtern, wird nach Massgabe der Bewegung des Turmes die Durchtrittsöffnung 44 relativ zu diesem schrittweise so versetzt, dass deren Lage bezüglich des Schachtes 62 annähernd gleich bleibt. Hierzu wird der dem Roststab 42' in Bewegungsrichtung folgende benachbarte Roststab 42'' zurückgezogen, nachdem der Roststab 42' in die eingeschobene Stellung verbracht worden ist. Dieses Zurückziehen bzw. Einschieben von Roststäben setzt sich bis zum letzten derselben fort. In der zurückgezogenen Stellung desselben und während des Umsteuervorganges kann nicht nur der Rest des Schlammes aus der eben abgebauten Lage, sondern auch Schlamm der nächsten Lage durch die Durchtrittsöffnung 44 gelangen. Nach erfolgter Umsteuerung wird der letzte Roststab 42' eingeschoben und anschliessend der rechtsseitig benachbarte Roststab zurückgezogen. Hat die Bewegungsrichtung nach links gewechselt, so fällt der schon an der Durchtrittsöffnung 44 abgelöste Schlamm auf der linken Seite des nach abwärts laufenden Bandes 70 unmittelbar auf die Sammelstelle 48'.

Zur Aufrechterhaltung einer annähernd konstanten Spannung des Bandes trotz diskontinuierlicher Versetzung der Durchtrittsöffnung 44 kann es zweckmässig sein, diesem zwischen der letzteren und der Entladestation 46 einen als Ausgleich dienenden Durchgang zu gestatten.

Insbesondere, um das Anfahren des Entwässerungsvorganges bei noch keinen Schlamm enthaltendem Turm zu erleichtern, können den Richtungen 84 und 84' entsprechende teleskopische Zuführrohre vorgesehen sein, die den Schlamm, geführt auf die über dem Boden 40 abzulegenden Schleifenstücke 74 aufbringen, und nach Massgabe des Anwachsens der Schlammsäule zurückgezogen werden. Während des Füllvorganges, d.h. der Bildung der durch die Schleifenstücke 74 getrennten horizontalen Schlammlagen, kann die Durchtrittöffnung 44 verschlossen bleiben. Sie wird erst dann geöffnet, wenn die Schlammsäule ihre vorgesehene Höhe und damit das benötigte Eigengewicht erreicht hat. Der Bandanfang, der schon durch den Rostboden hindurch aus dem Turm geführt ist, wird anschliessend mit dem ausserhalb des Turmes befindlichen Bandende zum Schliessen des endlosen Bandes 70 verbunden.

## Patentansprüche

1. Vorrichtung zum Entwässern von Schlamm enthaltend einen aufrechten Entwässerungsturm (2) mit ebenen Seitenflächen, die einen Entwässerungsraum (20) mit rechteckigem Innenquerschnitt seitlich begrenzen, eine obere Eintrittsöffnung (32), einen Boden (40) sowie eine untere, durch die offene Unterseite des Turmes gebildeten Austrittsöffnung (34), der Eintrittsöffnung zugeordnete Mittel (82, 86) zum Zuführen von Schlamm sowie ein bandförmiges Transmissivitätspaketes (70), wobei der Turm bezüglich dieser Mittel parallel zu einer Erstreckungsrichtung des Querschnittes relativ hin- und herbeweglich ist, um im Entwässerungsraum entsprechend dieser Erstreckungsrichtung Schleifenstücke (72) des in vertikaler Richtung schleifenförmig verlaufenden bandförmigen Transmissivitätspaketes auszulegen und damit überereinander aufgebaute, sich auf dem Boden abstützende Schlammlagen (74) zu begrenzen, eine im Boden vorgesehene, zum Turm parallel zu dieser Erstreckungsrichtung relativ versetzbar bewegliche, nach unten gerichtete Durchtrittsöffnung (44) für das Transmissivitätspaket und damit für den entwässerten Schlamm, sowie Ableitmittel (24), um aus den Schlammlagen verdrängtes und über das bandförmige Transmissivitätspaket seitlich austretendes Schlammwasser ausserhalb der Schlammlagen abzuführen.

2. Vorrichtung nach Anspruch 1, dadurch gekennzeichnet, dass der Turm (2) selbst bezüglich der Mittel (82, 86) zum Zuführen von zu entwässerndem Schlamm und des bandförmigen Transmissivitätspaketes (70) auf einer geradlinigen, horizontalen Bahn (8) zwischen zwei Endlagen verfahrbar ist und dass ein den Boden bildender Rost (40) aus parallelen Stäben (42) aufgebaut ist, die zur Versetzung der von Paaren derselben begrenzten Durchtrittsöffnung (44) axial aus dem Querschnitt ausfahrbar sind.

3. Vorrichtung nach Anspruch 1 oder 2, dadurch gekennzeichnet, dass unterhalb des Turmes (2) eine Entladezone (46) für das bandförmige Transmissivitätspaket (70) vorgesehen ist, um dieses von entwässertem Schlamm zu befreien.

4. Vorrichtung nach Anspruch 2 und 3, dadurch gekennzeichnet, dass die Versetzung der Durchtrittsöffnung (44) nach Massgabe der Turmbewegung erfolgt.

5. Vorrichtung nach einem der vorangehenden Ansprüche, dadurch gekennzeichet, dass das bandförmige Transmissivitätspaket aus Abschnitten gebildet ist, deren Breite grösser ist als der Querschnitt des Entwässerungsraumes (20) quer zur Richtung der Versetzbarkeit.

6. Vorrichtung nach Anspruch 5, dadurch gekennzeichnet, dass der Turm einen nach unten an den Entwässerungraum (20) anschliessenden Auslegeraum (30) aufweist, dessen Breite gleich oder grösser als jene des bandförmigen Transmissivitätspaketes ist und der mit dieser Breite dem Boden (40) und der Austrittsöffnung (34) zugekehrt ist.

## Claims

1. Device for dewatering sludge, comprising an upright dewatering tower (2), having planar side faces which laterally bound a dewatering chamber (20) of rectangular inside cross-section, an upper inlet opening (32), a base (40) and a lower outlet opening (34) formed by the open underside of the tower, means (82, 86) assigned to the inlet opening for supplying sludge and a belt-like transmissivity assembly (70), the tower being relatively movable back and forth in relation to said means parallel to one direction of extension of the cross-section in order to arrange loop sections (72) of the belt-like transmissivity assembly, running in loops in the vertical direction, in the dewatering chamber corresponding to said direction of extension and thus to bound layers (74) of sludge built up one above the other and supported on the base, a downwardly directed passage opening (44), which is provided in the bottom and is movable so as to be displaced relative to the tower parallel to said direction of extension, for the transmissivity assembly and thus for the dewatered sludge, and drainage means (24) in order to carry off sludge water, which is forced away from the layers of sludge and emerges laterally via the belt-like transmissivity assembly, outside the layers of sludge.

2. Device according to Claim 1, characterized in that the tower (2) is itself movable in relation to the means (82, 86) for supplying sludge to be dewatered and to the belt-like transmissivity assembly (70) on a straight, horizontal path (8) between two end positions, and in that a grate (40) forming the base is made up of parallel bars (42) which can be moved axially out of the cross-section to displace the passage opening (44) bounded by pairs of said bars.

3. Device according to Claim 1 or 2, characterized in that an unloading zone (46) for the belt-like transmissivity assembly (70) is provided below the tower (2) in order to remove dewatered sludge from said transmissivity assembly.

4. Device according to Claims 2 and 3, characterized in that the displacement of the passage opening (44) takes place in accordance with the amount of the tower movement.

5. Device according to one of the preceding claims, characterized in that the belt-like transmissivity assembly is formed from sections whose width is greater than the cross-section of the dewatering chamber (20) transversely to the direction of the offset.

6. Device according to Claim 5, characterized in that the tower has a laying-out compartment (30) which adjoins the dewatering compartment (20) at the bottom, whose width is equal to or greater than that of the belt-like transmissivity assembly, and which, with this width, faces the base (40) and the outlet opening (34).

## Revendications

1. Dispositif pour la déshydratation de boues, comprenant
une tour de déshydratation verticale (2) ayant des faces latérales plates, qui limitent latéralement un espace de déshydratation (20) à section transversale intérieure rectangulaire,
un orifice d'entrée supérieur (32), un fond (40) ainsi qu'un orifice de sortie inférieur (34), construit à travers le dessous ouvert de la tour,
des moyens (82, 86) affectés à l'orifice d'entrée pour l'amenée des boues ainsi qu'une balle de transmissibilité (70) sous forme de bande, la tour étant relativement mobile en mouvement de va-et-vient parallèlement à une direction d'extension de la section transversale par rapport à ces moyens, pour étaler dans l'espace de déshydratation suivant cette direction d'extension les sections de boucle (72) de la balle de transmissibilité sous forme de bande se développant en forme de boucle en direction verticale et en conséquence pour limiter des nappes de boue (74) placées les unes au-dessus des autres, s'étayant sur le fond,
un orifice de passage (44) pour la balle de transmissibilité et donc pour les bornes déshydratées, lequel orifice est prévu dans le fond, est mobile par décalage relativement à la tour de manière parallèle à cette direction d'extension, et est dirigé vers le bas, ainsi que des moyens de déversement (24), pour évacuer, hors des nappes de boue, l'eau boueuse déplacée hors des nappes de boue et s'échappant latéralement à l'aide de la balle de transmissibilité en forme de bande.

2. Dispositif selon la revendication 1, caractérisé en ce que la tour (2) est elle-même déplaçable par rapport aux moyens (82, 86) pour l'amenée des boues à déshydrater et de la balle de transmissibilité en forme de bande (70) sur une voie droite horizontale (8) entre deux positions terminales et en ce qu'une grille (40) formant le fond est construite à partir de tiges parallèles (42) qui sont déployables axialement hors de la section transversale pour le décalage de l'orifice de passage (44) limité par des paires de ces dernières.

3. Dispositif selon la revendication 1 ou 2, caractérisé en ce que sous la tour (2) est prévue une zone de déchargement (46) pour la balle de transmissibilité (70) sous forme de bande, pour libérer celle-ci des boues déshydratées.

4. Dispositif selon la revendication 2 ou 3, caractérisé en ce que le décalage de l'orifice de passage (44) se fait en rapport avec le mouvement de la tour.

5. Dispositif selon l'une quelconque des revendications précédentes, caractérisé en ce que la balle de transmissibilité sous forme de bande est formée à partir de sections, dont la largeur est supérieure à la section transversale de l'espace de déshydratation (20) perpendiculairement à la direction de capacité de décalage.

6. Dispositif selon la revendication 5, caractérisé en ce que la tour présente un espace d'étalage (30) adjacent vers le bas à l'espace de déshydratation (20), dont la largeur est supérieure ou égale à celle de la balle de transmissibilité en forme de bande et qui est tourné avec cette largeur vers le fond (40) et vers l'orifice de sortie (34).
